(19) Europäisches Patentamt
European Patent Office
Office européen des brevets

(11) **EP 2 728 726 B1**

(12) **EUROPEAN PATENT SPECIFICATION**

(45) Date of publication and mention
of the grant of the patent:
**06.03.2019 Bulletin 2019/10**

(51) Int Cl.:
*H02M 3/156* (2006.01)    *H02M 1/00* (2006.01)

(21) Application number: **12191480.8**

(22) Date of filing: **06.11.2012**

(54) **DC/DC CONVERTER SYSTEM AND METHOD FOR OPERATING A DC/DC CONVERTER**

GLEICHSTROMWANDLERSYSTEM UND VERFAHREN ZUR STEUERUNG DES GLEICHSTROMWANDLERS

SYSTÈME DE CONVERTISSEUR CC/CC ET PROCÉDÉ DE FONCTIONNEMENT D'UN CONVERTISSEUR CC/CC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.05.2014 Bulletin 2014/19**

(73) Proprietor: **ams AG**
**8141 Premstätten (AT)**

(72) Inventors:
• **Trattler, Peter**
**8054 Seiersberg-Pirka (AT)**
• **Pauritsch, Manfred**
**8054 Graz (AT)**

(74) Representative: **Epping - Hermann - Fischer Patentanwaltsgesellschaft mbH Schloßschmidstraße 5 80639 München (DE)**

(56) References cited:
**EP-A2- 1 134 880**    **US-A1- 2006 038 543**
**US-B1- 7 825 642**

• **KIMBALL J ET AL: "Continuous-time optimization of gate timing for synchronous rectification", CIRCUITS AND SYSTEMS, 1996., IEEE 39TH MIDWEST SYMPOSIUM ON AMES, IA, USA 18-21 AUG. 1996, NEW YORK, NY, USA, IEEE, US, vol. 3, 18 August 1996 (1996-08-18), pages 1015-1018, XP010222786, DOI: 10.1109/MWSCAS.1996.592895 ISBN: 978-0-7803-3636-0**
• **ABU-QAHOUQ J A ET AL: "Maximum efficiency point tracking (MEPT) method and dead time control", POWER ELECTRONICS SPECIALISTS CONFERENCE, 2004. PESC 04. 2004 IEEE 35TH ANNUAL, AACHEN, GERMANY 20-25 JUNE 2004, PISCATAWAY, NJ, USA, IEEE, US, 20 June 2004 (2004-06-20), page 3700, XP010738305, DOI: 10.1109/PESC.2004.1355130 ISBN: 978-0-7803-8399-9**

## Description

The invention relates to a DC/DC converter system that comprises a DC/DC converter and to a method for operating a DC/DC converter.

DC/DC converters, which are able to generate an output voltage from an input voltage in a switched fashion, are widely used, in particular if the input voltage potentially varies. Such DC/DC converters comprise for example buck converters, boost converters or buck/boost converters.

The effectiveness of such DC/DC converters depends on several influence factors internal to the DC/DC converter or external to the DC/DC converter. For example, the effectiveness varies with a varying supply voltage and/or varying loads at the output of the DC/DC converter. In conventional DC/DC converters, the design of the DC/DC converter may be adapted and optimized to estimated operation conditions, such that a trade-off for effectiveness is made if the operating conditions vary.

KIMBALL J ET AL: "Continuous-time optimization of gate timing for synchronous rectification", CIRCUITS AND SYSTEMS, 1996., IEEE 39TH MIDWEST SYMPOSIUM ON AMES, IA, USA 18-21 AUG. 1996, describes a method for increasing effectiveness of a synchronous rectifier by evaluating an input current and disclosed the features of the preambles of the independent claims.

Document EP 1 134 880 A2 describes a power supply control device which uses a resistance of a switching transistor for measuring current, instead of using a current sensing resistor.

An objective to be achieved is to provide an improved concept for operating a DC/DC converter under varying operating conditions.

This object is achieved with the subject-matter of the independent claims. Embodiments and developments of the improved concept are subject-matter of the dependent claims.

The improved concept is based on the idea that the effectiveness of the DC/DC converter is determined during operation of the DC/DC converter, and that the DC/DC converter has one or more adjustable operating parameters. These operating parameters are iteratively varied or adjusted in order to find an optimum effectiveness of the DC/DC converter. Hence, the DC/DC converter can be operated in a most efficient way even under varying operating conditions, in particular given externally.

An embodiment of a DC/DC converter system according to the improved concept comprises a DC/DC converter which is configured to generate, in a switched fashion, an output voltage from an input voltage supplied at a supply terminal and which has at least one adjustable operating parameter, and comprises an optimization circuit. The optimization circuit is configured to select one of the at least one adjustable operating parameter. The optimization circuit is further configured to iteratively, for the selected operating parameter, determine a supply current provided at the supply terminal, determine effectiveness of the DC/DC converter based on the determined supply current, and adjust the selected operating parameter, until an optimum effectiveness of the DC/DC converter is determined.

Determining the effectiveness based on the supply current can be performed with little effort. For example, the supply current can be at least partially measured in a current path from the supply terminal. The measurement may be performed by means of well-known shunt resistors or the like.

The effectiveness of the DC/DC converter may be determined by calculating an efficiency factor between output power and input power, the latter depending on the supply current. As an alternative, the effectiveness may be determined by the size or value of the supply current determined. For example, the optimum effectiveness may be defined by a lowest determined supply current for the connected load.

With the proposed improved concept, a most efficient operating mode can be set for the DC/DC converter even during operation and without actual knowledge about the operating conditions, e.g. supply voltage, load conditions or the like. In particular, the optimization circuit finds the best operating parameters for the DC/DC converter under the actual operating conditions.

If there is more than one adjustable operating parameter, the procedure of finding an optimum parameter under the actual operating conditions may be performed for one or more of the other operating parameters in the same way as for the first selected operating parameter of the DC/DC converter.

For example, according to one embodiment of the DC/DC converter system, the DC/DC converter has at least two adjustable operating parameters, wherein the optimization circuit is configured to, after determining the optimum effectiveness for the selected operating parameter, select one further of the at least two adjustable operating parameters, and determine an optimum effectiveness of the DC/DC converter for the further selected operating parameter while adjusting the further selected operating parameter based on a determined supply current.

In the following, several possible adjustable operating parameters of the DC/DC converter are described, which form a set of which one or more parameters are selected to find the setting of highest effectiveness.

For example, an operating frequency of the DC/DC converter may be provided in an adjustable fashion. For example, the operating frequency is generated based on an RC circuit, which may be adjusted by varying the resistance of the RC circuit. As a consequence, the operating frequency changes with the varying RC value.

Furthermore, the size of a switching transistor doing the switching operation of the DC/DC converter may be varied. For example, switching transistors of different size can be used alternatively. In a specific embodiment, the DC/DC converter comprises a switching transistor that includes a plurality of parallel connected transistors, wherein respective control terminals of the plurality of parallel connected transistors are each connected to a common control terminal of the switching transistor in a switchable fashion. Hence, for each of the parallel connected transistors it can be set whether it reacts to a control signal at the common control terminal or not. Thus, the size of the switching transistor is determined by the number of transistors being actually controllable.

A further operating parameter to be adjusted is a control voltage of a switching transistor of the DC/DC converter which, for example, determines the current through or the voltage drop over the switching transistor.

One further possible adjustable operating parameter is the switching speed of such a switching transistor. For example, the switching speed is determined by an RC factor defined by a resistance between the control terminal driver and the control terminal of the switching transistor and a capacitance of the switching transistor. Hence, by varying the resistance, the RC factor and thus the switching speed are altered.

A further optional adjustable operating parameter is the switching delay of such a switching transistor, especially if the DC/DC converter uses a controlled switch instead of a Schottky diode. For example, a dead time of the switching transistor can be set in this way.

A further optional adjustable operating parameter is an adjustable overlap time between two switching transistors, if a DC/DC converter with two switches is used.

According to various embodiments, the optimization circuit is configured to limit an adjustment range of the adjustable operating parameters. Such limitation may be based on prior knowledge of the application of the DC/DC converter and can limit the variation of the operating parameters to useful settings.

Additionally, not all of the operating parameters of the DC/DC converter, which can be adjusted, need to be adjusted during operation. For example, some of the adjustable operating parameters may only be set to an optimum value during a calibration process, while during normal operation the respective operating parameter is kept at the optimum setting. For example, adjustment of some of the operating parameters may have unwanted effects on the operation of a circuit supplied by the DC/DC converter.

In various embodiments in which the DC/DC converter comprises a switching transistor, the optimization circuit is configured to determine the supply current based on a current through the switching transistor.

For example, the optimization circuit is configured to determine the supply current as an average current during at least one switching period of the DC/DC converter. For example, the supply current is measured during one or more switching periods and an average current is formed from the measurement. Using the average current may be advantageous if the supply current varies over respective switching periods, in particular within one switching period.

In a specific embodiment, the optimization circuit is configured to calculate the average current based on a current through the switching transistor during an on-time of the switching transistor. For example, the supply current is measured only during the on-time of the switching transistor while the average current is determined by calculating the supply current during the off-times of the switching transistor.

In various embodiments the optimization circuit is configured to determine the supply current using an analog-to-digital converter, which may sample a measured supply current to digital values. The digital values corresponding to the supply current can be processed more easily within the optimization circuit, in particular for average current calculation.

The various functions of the optimization circuit may be implemented as a program or a software within an application processor connected to the DC/DC converter. In alternative implementations, the function of the optimization circuit may be implemented in a state machine, in particular a finite-state machine. A further implementation alternative is to provide the function of the optimization circuit by means of or within a microcontroller being programmed with a respective program code.

According to the improved concept, an embodiment of a method for operating a DC/DC converter, which is configured to generate, in a switched fashion, an output voltage from an input voltage supplied at a supply terminal and has at least one adjustable operating parameter, the following steps are performed: one of the at least one adjustable operating parameters is selected. Iteratively, for the selected operating parameter, a supply current provided at the supply terminal is determined, an effectiveness of the DC/DC converter based on the supply current is determined and the selected operating parameter is adjusted, until an optimum effectiveness is determined.

Various embodiments of the method become apparent from the embodiments of the DC/DC converter system described above. In particular, the method can be extended to two or more adjustable operating parameters as described above. Furthermore, regarding the potentially adjustable operating parameters, it is referred to the description above.

The text below explains the invention in detail using exemplary embodiments with reference to the drawings. Components and circuit elements that are functionally identical or have the identical effect bear identical reference numbers. In so far as circuit parts or components correspond to one or another function, description of them will not be repeated in each of the following figures.

In the drawings:

Figure 1    shows an exemplary embodiment of a DC/DC converter system,

Figure 2    shows a further exemplary embodiment of a DC/DC converter system,

Figure 3    shows an exemplary embodiment of a switching transistor with adjustable size,

Figure 4    shows a signal time diagram of a supply current,

Figure 5    shows a further signal time diagram of a supply current,

Figure 6    shows an exemplary signal diagram for power efficiency,

Figure 7    shows a block diagram of an exemplary embodiment of a method for operating a DC/DC converter, and

Figure 8    shows a block diagram of a further exemplary embodiment of a method for operating a DC/DC converter.

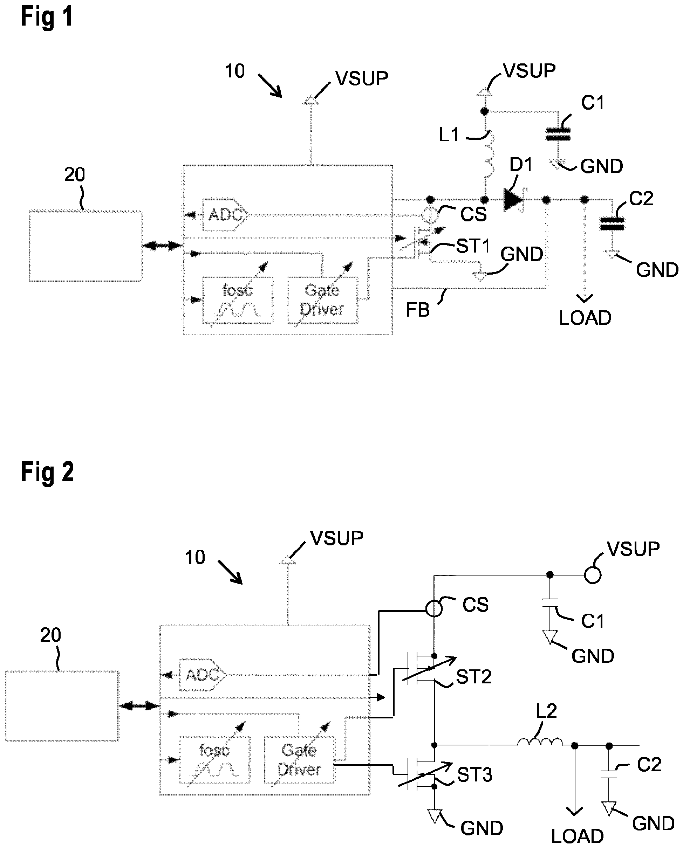

Figure 1 shows an embodiment of a DC/DC converter system comprising a DC/DC converter 10 and an optimization circuit 20. The DC/DC converter 10 comprises circuit parts like coils, capacitors, switches, diodes or the like and a control portion for controlling the function of the circuit parts. In the embodiment of Figure 1, the circuit parts are arranged similar to a conventional step-up DC/DC converter or boost converter. In particular, a coil L1 is connected between a supply terminal VSUP and the anode of a diode D1, in particular a Schottky diode D1. A stabilizing capacitor C1 is connected between the supply terminal VSUP and a reference terminal GND. The coil L1 and the diode D1 are further connected to a switching transistor ST1, which is formed as an n-channel field effect transistor, for example an NMOS transistor. The drain connection of the switching transistor ST1 is connected to the reference terminal GND. The cathode of the diode D1 forms an output of the DC/DC converter, to which a load can be connected. Furthermore, the output of the DC/DC converter is connected to the reference terminal GND by means of a second capacitor C2. The output is further connected to the controlling section of the DC/DC converter to provide a feedback loop FB, which is one of several well-known possibilities to control a DC/DC converter.

The control section of the DC/DC converter is supplied by the supply terminal VSUP. It further comprises an analog-to-digital converter ADC which is connected to a current sensor CS that is placed in the current path of the switching transistor ST1 in order to sense the transistor current. The control section of the DC/DC converter 10 further comprises a frequency generator for providing an operating frequency fosc, which is adjustable. Furthermore, the control section comprises a gate driver which is connected to the gate terminal of the switching transistor ST1 and which is also adjustable, which will be explained later in more detail.

Also the switching transistor ST1 is provided as an adjustable transistor, which in particular can be adjusted regarding its size, unlike in conventional DC/DC converters.

The optimization circuit 20 is coupled to the control section of the DC/DC converter 10 for interaction with the control section, which is indicated by the double-sided arrow. For example, the optimization circuit 20 is configured to adjust the operating frequency fosc, the gate driver and the adjustable switching transistor ST1, and is configured to receive the digitized current provided by the current sensor CS and the analog-to-digital converter ADC.

The actual switching control of the DC/DC converter 10 is neither shown here nor explained in more detail because such control schemes are well-known in the art and do not influence the effect of the improved concept described herein. In general, the DC/DC converter 10 is configured to generate, in a switched fashion, an output voltage from an input voltage supplied at the supply terminal VSUP.

The optimization circuit 20 is configured to adjust at least one of the adjustable operating parameters, which in this embodiment are given by the transistor size, the operating frequency fosc, and several parameters of the gate driver. In particular, the optimization circuit adjusts a selected operating parameter until an optimum effectiveness can be determined by means of a supply current provided at the supply terminal VSUP. In this particular case, the supply current is determined on the basis of the sensed transistor current.

In particular, the optimization circuit is configured, for a selected operating parameter, to iteratively determine a supply current provided at the supply terminal VSUP, determined an effectiveness of the DC/DC converter based on the determined supply current, and adjust the selected operating parameter until an optimum effectiveness is determined. For example, the effectiveness may be calculated as a power efficiency as the ratio between an output power and an input power that can be calculated based on the supply current. As an alternative, the supply current can be directly taken as a measure for the effectiveness, such that an optimum effectiveness is defined by a lowest determined supply current for an adjusted or varied operating parameter.

The optimization process controlled by the optimization circuit 20 can be performed during normal operation of the DC/DC converter and/or during a calibration phase of the DC/DC converter. In particular, the DC/DC converter can be optimized for an assumed application, for example based on a given load situation. In this calibration procedure, all of the available adjustable operating parameters may be adjusted to find the optimum effectiveness of the system. The same operating parameter may be optimized several times in order to address dependencies between the single operating parameters.

During a normal operation of the DC/DC converter, the set of adjustable operating parameters may be limited such that some of the operating parameters are held constant while only one or more of the other operating parameters are set or adjusted. Furthermore, an adjustment range of each of the adjustable operating parameters may be limited by the optimization circuit. Hence, parameter settings that are expected to be of insignificant meaning or provide an unwanted behaviour of the DC/DC converter system, for example, may be excluded in advance.

The gate driver may have various adjustable operating parameters. For example, a control voltage of the switching transistor ST1 may be varied. Furthermore, a switching speed of the switching transistor ST1 can be varied. This is, for example, done by changing a resistance between the gate driver and the gate terminal of the switching transistor ST1, which influences an RC time constant given by that resistance and the gate source capacitance of the switching transistor ST1. Furthermore, a switching delay of the switching transistor ST1 can be set within the gate driver, for example to influence a dead time of the control voltage.

The operating frequency fosc of the DC/DC converter may be generated based on a further RC time constant used in a well-known oscillator circuit. For example by varying the resistance of the RC circuit, the effective operating frequency fosc may be changed.

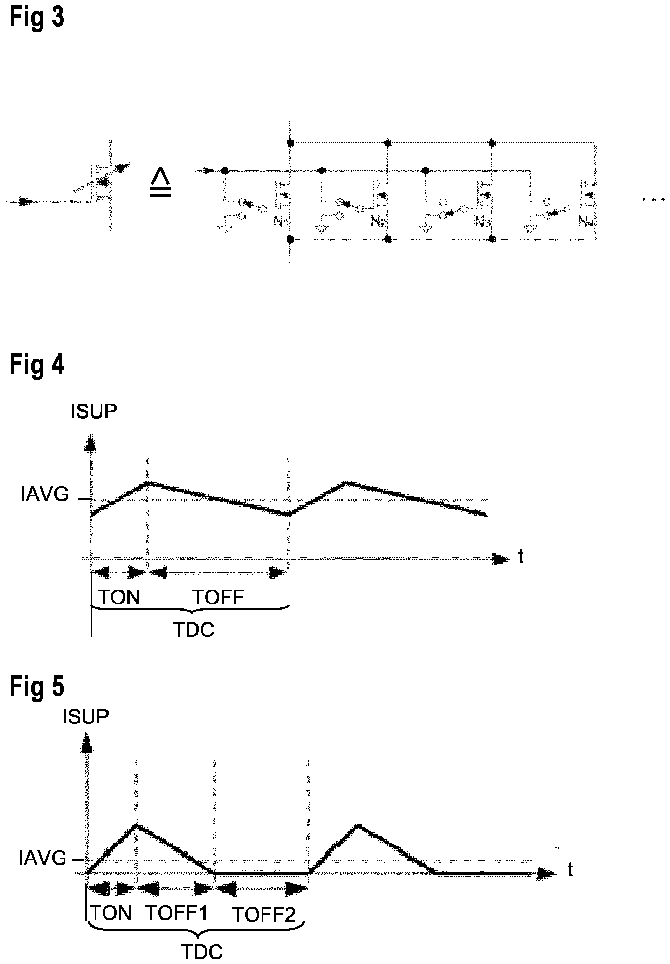

Determination of the supply current will be explained later in more detail in conjunction with Figure 4 and Figure 5.

Figure 2 shows another embodiment of a DC/DC converter system, which is based on a well-known step-down converter or buck converter, which however is operated with support of the optimization circuit 20 according to the improved concept. Regarding the optimization, the same principle or concept as described for Figure 1 is used and merely adapted to the different circuit elements of the buck converter. Hence, a detailed description of the optimization process will not be repeated for the embodiment of Figure 2, as it becomes apparent from the description of Figure 1.

The circuit parts of the DC/DC converter 10 again comprise a first capacitor C1 which is connected between the supply terminal VSUP and the reference terminal GND. A series connection of a p-channel field effect transistor ST2, for example a PMOS transistor, and an n-channel field effect transistor ST3, for example an NMOS transistor, is connected between the supply terminal VSUP and the reference terminal GND, wherein the switching transistor ST2 is located at the supply terminal VSUP side. As in the embodiment of Figure 1, a current sensor CS is placed in the current path between the supply terminal VSUP and the switching transistor ST2, which in this case directly measures the supply current provided at the supply terminal VSUP. A connection between the switching transistors ST2 and ST3 is connected to an output of the DC/DC converter 10 by means of a coil L2. As in the embodiment of Figure 1, a load can be connected to this output terminal, as well as a capacitor C2, which is connected between the output terminal and the reference terminal GND. A feedback loop as in Figure 1 is omitted in this drawings for a better overview only.

The controlling portion of the DC/DC converter 10 of Figure 2 is similar to that of Figure 1, wherein the gate driver individually controls both switching transistors ST2, ST3. Each of the switching transistors ST2, ST3 may be adjustable regarding its size. Furthermore, the individual control voltage provided to the gate terminals may be adjustable, same as the switching speed of the individual switching transistors ST2, ST3 and switching delays of the switching transistors ST2, ST3.

A further optional adjustable operating parameter is an adjustable overlap time between the two switching transistors ST2, ST3. For example, a time between turning off transistor ST2 to turning on transistor ST3 and/or a time between turning off transistor ST3 to turning on transistor ST2 can be varied.

Again, as described for the embodiment of Figure 1, the various adjustable operating parameters may be adjusted by means of the optimization circuit 20 in order to find an optimum effectiveness based on the sensed supply current.

It should be noted that the examples of Figure 1 and Figure 2 regarding a step-up converter and a step-down converter, which are commonly used implementations of DC/DC converters, are only used to show some specific implementations of the improved concept. However, the improved concept can be used with any DC/DC converter being provided with adjustable operating parameters.

Figure 3 shows an exemplary implementation form of a switching transistor that is adjustable regarding its size. For example, the adjustable switching transistor, which is shown as an NMOS transistor, is implemented as a plurality of single NMOS transistors N1, N2, N3, N4, which are connected in parallel regarding their controlled section. The gate terminals of the individual transistors N1, N2, N3, N4 can be switched between the reference terminal GND and a common control terminal of the adjustable switching transistor. To this end, only the transistors that are connected to the common control terminal, in the depicted case transistors N1, N2, are actually controlled by the control voltage at the common control terminal, while the other transistors, in this case transistors N3, N4, are fixedly held in a non-conducting state. The number of four transistors shown in this embodiment can be varied to a smaller or a greater number, indicated by the ellipsis symbol. The transistors N1, N2, N3, N4 may have the same size or may be weighted with respect to each other.

The use of such an adjustable switching transistor for the switching transistors shown in Figure 1 and Figure 2 can vary the effectiveness of the overall system and the overall effectiveness. In particular, the effectiveness of the DC/DC converter is not only dependent on the on-resistance of a switching transistor but also on a quiescent current of the circuit. In the above example of Figure 3, the quiescent current of the gate driver is reduced as it only needs to drive transistors N1 and N2. In other words, the overall effectiveness of the DC/DC converter can be improved by using only part of the adjustable switching transistor.

Referring back to the current measurement with the current sensor CS in Figure 1, Figure 4 and Figure 5 show exemplary signal diagrams of the supply current ISUP provided from the supply terminal VSUP for different operating modes. In particular, Figure 4 shows a signal diagram of a DC/DC converter in continuous conduction mode, whereas in Figure 5 a signal diagram of a DC/DC converter in discontinuous conduction mode is depicted.

If the switching transistor ST1 is in a conducting state, depicted by the time period TON, the supply current ISUP is identical to the current through the switching transistor ST1. In a non-conducting state of the transistor ST1, the supply current flows, as long as possible, through the diode D1.

Referring to Figure 4, in the continuous conduction mode operation, the supply current ISUP increases from a lower non-zero value to a higher value during the on-time TON of the switching transistor ST1. During the off-time TOFF of the switching transistor ST1, the supply current ISUP decreases basically back to the starting point from which, during the next switching cycle TDC, the transistor current starts again. As can be seen from the diagram of Figure 4, the average current IAVG during the on-time TON is the same as the average current during the off-time TOFF, such that it is sufficient to have knowledge of the transistor current to determine the average supply current IAVG. The effectiveness in the optimization circuit 20 can be determined based on this average current IAVG. Hence, this simplification eases the determination of the effectiveness of the DC/DC converter as it is not necessary to directly measure the supply current ISUP.

In the discontinuous conduction mode of operation shown in Figure 5, the supply current ISUP starts from zero at the beginning of the conducting phase TON of the switching transistor T1 and returns back to zero in a first portion TOFF1 in a non-conducting state of the switching transistor ST1. During a second portion TOFF2, during which the switching transistor ST1 is non-conducting, no supply current ISUP is provided. In other words, both the transistor ST1 and the diode D1 are in a non-conducting state. However, the supply current ISUP can be calculated by the average current through the switching transistor ST1 during the on-time TON times the duration where either of the transistor ST1 and the diode D1 is conducting, namely TON + TOFF1, divided by the clock period or switching period TDC. Expressed as a formula:

$$\mathrm{IAVG} = \mathrm{IAVG}_{\mathrm{TON}} \frac{\mathrm{TON} + \mathrm{TOFF1}}{\mathrm{TON} + \mathrm{TOFF1} + \mathrm{TOFF2}} = \mathrm{IAVG}_{\mathrm{TON}} \frac{\mathrm{TON} + \mathrm{TOFF1}}{\mathrm{TDC}} \ .$$

The duration of the conduction of the diode D1 can be measured by observing the voltage on the switch pin, or in the general, the voltage across the diode D1. Hence, determination of the average supply current IAVG is performed with less effort than by directly measuring the supply current ISUP. However, if the current through the switching transistor ST1 and the diode D1 can each be measured, the average supply current IAVG can be directly determined without the need for the above-described calculation.

Consequently, the optimization circuit 20 may be configured to find the optimum effectiveness based on a lowest determined average supply current IAVG.

Referring to Figure 2, it should be noted that the current sensed by the current sensor CS is both the supply current ISUP and the transistor current through the switching transistor ST2 at any time. Hence, the average current IAVG can be measured or calculated directly from the sensed current.

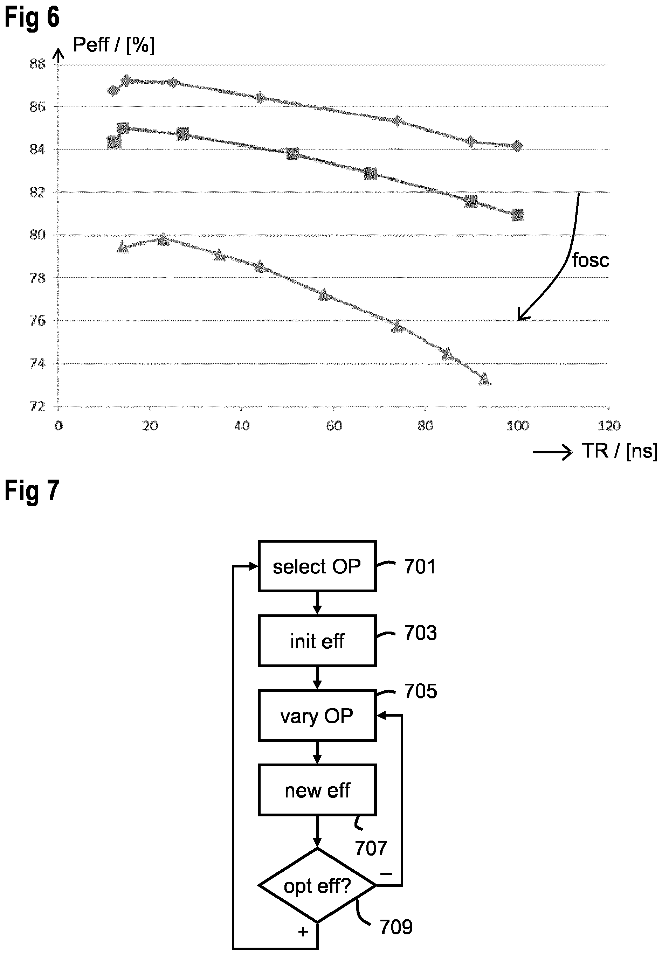

Figure 6 shows an exemplary signal diagram of a determined power efficiency Peff depending on a varied drive time or switching time TR of the switching transistor. The three curves in this diagram refer to different operating frequencies fosc in order to show that the optimum effectiveness is not the same for all operating frequencies.

In particular, the uppermost curve, marked with diamonds, denotes a lowest frequency, the middle curve marked with squares denotes a medium frequency and the lowermost curve marked with triangles denotes a highest frequency. As can be seen from all three curves, the power efficiency Peff decreases for increasing switching times TR above a value of about 30 ns for TR. However, this is not true in the opposite direction, as for the lowest frequency fosc, the highest power efficiency is reached at about 18 ns, for the middle frequency fosc the optimum efficiency is reached at about 17 ns and for the highest frequency fosc the optimum efficiency is reached at about 25 ns. Hence, if during an optimization process both the operating frequency fosc and the switching time TR are varied, the optimum combination can be found by using the improved concept.

Figure 7 shows a block diagram of an exemplary method for operating a DC/DC converter, which may be applied to the optimization circuit 20 of the embodiments of Figure 1 and Figure 2.

In block 701 one of the adjustable operating parameters, abbreviated by OP in the drawing, is selected for optimization. In the next block 703, an initial effectiveness is determined, for example by measuring the supply current ISUP as described before. This initial effectiveness may be used as a reference for the further optimization process. In block 705, the selected operating parameter is varied, and in the following block 707 the new effectiveness with the varied operating parameter is determined. In block 709 it is checked whether the newly determined effectiveness is the optimum effectiveness for the selected operating parameter. If not, it is continued at block 705 by further varying the operating parameter, until the optimum effectiveness is reached. In this case, it is continued at block 701 by selecting another operating parameter, if available. If only one operating parameter is adjustable, the procedure stops after having determined the optimum effectiveness, but may be started again if some outside conditions change. More specific implementations of the single blocks become apparent form the description above.

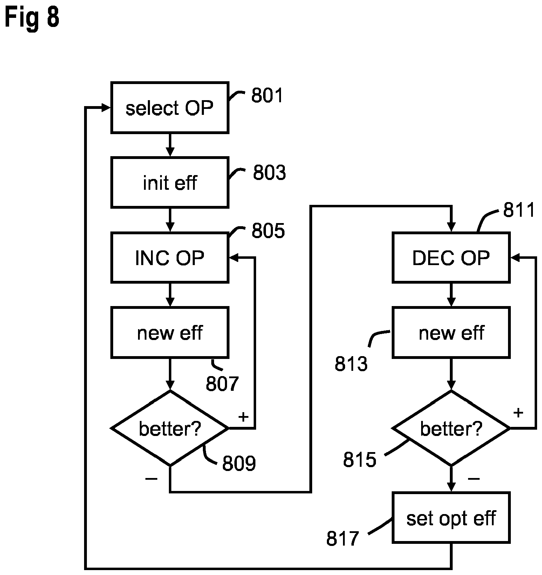

Figure 8 describes a further embodiment of a method for operating a DC/DC converter on the basis of a block diagram. In general, the embodiment of Figure 8 is based on the embodiment of Figure 7.

Thus, in block 801, one of the adjustable operating parameters is selected for optimization. In a next block 803, corresponding to block 703, an initial effectiveness for the selected operating parameter is determined. In block 805, the operating parameter is increased or, in other words, varied in a first direction which may be regarded as a positive direction. In block 807, the new effectiveness for the increased operating parameter is determined, similar to block 707.

In block 809 it is determined whether the new effectiveness is better than the initial effectiveness or a previously determined effectiveness. If this is the case, it is continued at block 805 by further increasing the selected operating parameter as it is assumed that the operating parameter is varied in the right direction.

If no better effectiveness can be found in block 809, it is continued at block 811, in which the selected operating parameter is decreased, or in other words, varied in a second direction, being primarily opposite to the first direction described above. In block 813, similar to the block 807, the new effectiveness for the adjustable operating parameter is determined, which is checked in block 815. In particular, it is continued at block 811 until no better effectiveness or better setting for the operating parameter can be found. Hence, in a last block 817, the optimum setting for the selected operating parameter is made. Then, it is continued at block 801 by selecting one other adjustable operating parameter. Also the method described in the embodiment of Figure 8 can be implemented in the optimization circuit 20 of Figure 1 or Figure 2.

The optimization circuit may be implemented in a processor, e.g. an application processor, as a program or software running on this processor. For example, the DC/DC converter system is implemented in a mobile terminal, e.g. a mobile phone, a tablet computer, an MP3 player or the like, such that the processor of the mobile terminal is used for carrying out the optimization process and acting as the optimization circuit 20. In other implementation forms, the optimization circuit 20 may be implemented as a finite-state machine or in the form of a microprocessor carrying out respective program code.

In the above-described embodiments, which can be combined in various ways, an optimization circuit or an optimization algorithm, constantly varies available and allowed operating parameters like an operating frequency of the DC/DC converter, a switch size of a switching transistor or the like and checks a sensed supply current. This allows the optimization circuit or optimization algorithm to find the optimum effectiveness by adjusting the available parameters. For a given operating condition, e.g. defined by a desired output voltage and a desired output current and especially for parasitics of the circuit, e.g. coil parasitic capacitance, parasitic capacitance on the switching node, it is sufficient to optimize the supply current to obtain the best operating point in terms of effectiveness. The effectiveness of the system can be measured directly, but only using the sensed supply current reduces the optimization effort.

In some applications, the parameter ranges of the adjustable operating parameters may have to be limited to reasonable operating ranges. If, for example, it is no desired to vary the operating frequency, this parameter shall be kept constant. Additionally, it may be advantageous to limit the minimum size of the switching transistor depending on a required output current to avoid too excessive heat dissipation inside the device in transitional periods. In other words, if it is known in advance or during operation that the output current is to be set to the full current, the usable size ranges of the operating parameter "size of the switching transistor" can be limited in advance or during operation.

Depending on a load condition, an inductor used, a supply voltage, temperature and other environmental conditions, the optimization circuit or algorithm automatically adjusts its available parameters to optimize effectiveness of the DC/DC converter.

**Claims**

1.   DC/DC converter system, comprising a DC/DC converter (10), which is configured to generate, in a switched fashion, an output voltage from an input voltage supplied at a supply terminal (VSUP) and has at least one adjustable operating parameter, and comprising an optimization circuit (20), which is configured to select one of the at least one adjustable operating parameters and, for the selected operating parameter, to iteratively

- determine a supply current provided at the supply terminal (VSUP);
- determine an effectiveness of the DC/DC converter (10) based on the determined supply current; and
- adjust the selected operating parameter;

until an optimum effectiveness is determined;
wherein the DC/DC converter (10) comprises a switching transistor (ST1, ST2); **characterized in that** the optimization circuit (20) is configured

- to determine a first average current ($IAVG_{TON}$) during an ON-time (TON) of the switching transistor (ST1, ST2) by measuring the current through the switching transistor (ST1, ST2) during the ON-time (TON) of the switching transistor (ST1, ST2);
- to calculate a second average current (IAVG) during at least one switching period (TDC) of the DC/DC converter (10) based on the first average current ($IAVG_{TON}$) ; and
- to use the second average current (IAVG) as the supply current to be determined.

2. DC/DC converter system according to claim 1,
wherein the optimum effectiveness is defined by a lowest determined supply current.

3. DC/DC converter system according to claim 1 or 2,
wherein the optimization circuit (20) is configured to limit an adjustment range of the adjustable operating parameters.

4. DC/DC converter system according to one of claims 1 to 3, wherein the optimization circuit (20) is configured to calculate the second average current (IAVG) by determining the current through the switching transistor (ST1, ST2) during an OFF-time (TOFF, TOFF1, TOFF2) of the switching transistor (ST1, ST2) based on the first average current ($IAVG_{TON}$).

5. DC/DC converter system according to one of claims 1 to 4, wherein the optimization circuit (20) is configured, in a continuous conduction mode of operation of the DC/DC converter, to use the first average current ($IAVG_{TON}$) for the second average current (IAVG).

6. DC/DC converter system according to claim 5,
wherein the optimization circuit (20) is configured, in a discontinuous conduction mode of operation of the DC/DC converter, to calculate the second average current IAVG based on the first average current $IAVG_{TON}$ according to:

$$\mathrm{IAVG} = \mathrm{IAVG_{TON}} \frac{\mathrm{TON + TOFF1}}{\mathrm{TON + TOFF1 + TOFF2}} = \mathrm{IAVG_{TON}} \frac{\mathrm{TON + TOFF1}}{\mathrm{TON + TOFF}} ,$$

where TON is the ON-time, TOFF1 is a first non-conducting portion of the OFF-time TOFF, during which the supply current returns back to zero, and TOFF2 is a second non-conducting portion of the OFF-time TOFF, during which the supply current is zero.

7. DC/DC converter system according to one of claims 1 to 6, wherein the optimization circuit (20) is configured to determine the supply current using an analog-to-digital converter (ADC).

8. DC/DC converter system according to one of claims 1 to 7, wherein the DC/DC converter (10) has at least two adjustable operating parameters, and wherein the optimization circuit (20) is configured to, after determining the optimum effectiveness for the selected operating parameter,

- select one further of the at least two adjustable operating parameters; and
- determine an optimum effectiveness of the DC/DC converter (10) for the further selected operating parameter while adjusting the further selected operating parameter based on a determined supply current.

9. DC/DC converter system according to one of claims 1 to 8, wherein the at least one adjustable operating parameter comprises at least one of the following:

- an operating frequency of the DC/DC converter (10);
- a size of a switching transistor (ST1, ST2);

- a control voltage of the switching transistor (ST1, ST2) ;
- a switching speed of the switching transistor (ST1, ST2) ;
- a switching delay of the switching transistor (ST1, ST2) ;
- an adjustable overlap time between two switching transistors.

10. DC/DC converter system according to one of claims 1 to 9, wherein the DC/DC converter (10) comprises a switching transistor (ST1, ST2) that includes a plurality of parallel connected transistors, wherein respective control terminals of the plurality of parallel connected transistors are each connected to a common control terminal of the switching transistor (ST1, ST2) in a switchable fashion.

11. Method for operating a DC/DC converter (10), which is configured to generate, in a switched fashion, an output voltage from an input voltage supplied at a supply terminal (VSUP) and has at least one adjustable operating parameter, the method comprising:

   - selecting one of the at least one adjustable operating parameters; and
   - iteratively, for the selected operating parameter,

      - determining a supply current provided at the supply terminal (VSUP);
      - determining an effectiveness of the DC/DC converter (10) based on the determined supply current; and
      - adjusting the selected operating parameter;

   until an optimum effectiveness is determined;
   wherein the DC/DC converter (10) comprises a switching transistor (ST1, ST2); **characterized in that** determining the supply current comprises

      - determining a first average current ($IAVG_{TON}$) during an ON-time (TON) of the switching transistor (ST1, ST2) by measuring the current through the switching transistor (ST1, ST2) during the ON-time (TON) of the switching transistor (ST1, ST2);
      - calculating a second average current (IAVG) during at least one switching period (TDC) of the DC/DC converter (10) based on the first average current ($IAVG_{TON}$) ; and
      - using the second average current (IAVG) as the supply current to be determined.

12. Method according to claim 11,
   wherein the optimum effectiveness is defined by a lowest determined supply current.

13. Method according to claim 11 or 12,
   wherein calculating the second average current (IAVG) comprises determining the current through the switching transistor (ST1, ST2) during an OFF-time (TOFF, TOFF1, TOFF2) of the switching transistor (ST1, ST2) based on the first average current ($IAVG_{TON}$).

14. Method according to one of claims 11 to 13,
   wherein the DC/DC converter (10) has at least two adjustable operating parameters, and wherein the method further comprises, after determining the optimum effectiveness for the selected operating parameter,

   - selecting one further of the at least two adjustable operating parameters; and
   - determining an optimum effectiveness of the DC/DC converter (10) for the further selected operating parameter while adjusting the further selected operating parameter based on a determined supply current.

15. Method according to one of claims 11 to 14,
   wherein the at least one adjustable operating parameter comprises at least one of the following:

   - an operating frequency of the DC/DC converter (10);
   - a size of a switching transistor (ST1, ST2);
   - a control voltage of the switching transistor (ST1, ST2) ;
   - a switching speed of the switching transistor (ST1, ST2); and
   - a switching delay of the switching transistor (ST1, ST2) ;
   - an adjustable overlap time between two switching transistors.

**Patentansprüche**

1. DC/DC-Wandlersystem, umfassend einen DC/DC-Wandler (10), der konfiguriert ist, um geschaltet eine Ausgangsspannung aus einer an einer Einspeiseklemme (VSUP) zugeführten Eingangsspannung zu erzeugen und der mindestens einen einstellbaren Betriebsparameter aufweist, und umfassend eine Optimierungsschaltung (20), die konfiguriert ist, um einen der mindestens einen einstellbaren Betriebsparameter auszuwählen und um für den ausgewählten Betriebsparameter iterativ

   - einen an der Versorgungsklemme (VSUP) bereitgestellten Versorgungsstroms zu bestimmen;
   - eine Effizienz des DC/DC-Wandlers (10) basierend auf dem bestimmten Versorgungsstrom zu bestimmen; und
   - den ausgewählten Betriebsparameter anzupassen;

   bis eine optimale Effizienz bestimmt ist;
   wobei der DC/DC-Wandler (10) einen Schalttransistor (ST1, ST2) umfasst;
   **dadurch gekennzeichnet, dass**
   die Optimierungsschaltung (20) konfiguriert ist,

   - um einen ersten mittleren Strom ($IAVG_{TON}$) während einer EIN-Zeit (TON) des Schalttransistors (ST1, ST2) zu bestimmen, indem der Strom durch den Schalttransistor (ST1, ST2) während der EIN-Zeit (TON) des Schalttransistors (ST1, ST2) gemessen wird;
   - um einen zweiten Durchschnittsstrom (IAVG) während mindestens einer Schaltperiode (TDC) des DC/DC-Wandlers (10) basierend auf dem ersten Durchschnittsstrom ($IAVG_{TON}$) zu berechnen; und
   - um den zweiten Durchschnittsstrom (IAVG) als den zu bestimmenden Versorgungsstrom zu verwenden.

2. DC/DC-Wandlersystem nach Anspruch 1,
   wobei die optimale Effizienz durch einen niedrigsten bestimmten Versorgungsstrom definiert ist.

3. DC/DC-Wandlersystem nach Anspruch 1 oder 2,
   wobei die Optimierungsschaltung (20) konfiguriert ist, um einen Einstellbereich der einstellbaren Betriebsparameter zu begrenzen.

4. DC/DC-Wandlersystem nach einem der Ansprüche 1 bis 3, wobei die Optimierungsschaltung (20) konfiguriert ist, um den zweiten Durchschnittsstrom (IAVG) zu berechnen, indem der Strom durch den Schalttransistor (ST1, ST2) während einer AUS-Zeit (TOFF, TOFF1, TOFF2) des Schalttransistors (ST1, ST2) basierend auf dem ersten Durchschnittsstrom ($IAVG_{TON}$) bestimmt wird.

5. DC/DC-Wandlersystem nach einem der Ansprüche 1 bis 4, wobei die Optimierungsschaltung (20) in einer kontinuierlichen Leitungsbetriebsart des DC/DC-Wandlers konfiguriert ist, um den ersten Durchschnittsstrom ($IAVG_{TON}$) für den zweiten Durchschnittsstrom (IAVG) zu verwenden.

6. DC/DC-Wandlersystem nach Anspruch 5,
   wobei die Optimierungsschaltung (20) in einer diskontinuierlichen Leitungsbetriebsart des DC/DC-Wandlers konfiguriert ist, um den zweiten durchschnittlichen Strom IAVG basierend auf dem ersten durchschnittlichen Strom $IAVG_{TON}$ zu berechnen gemäß:

$$IAVG = IAVG_{TON} \frac{TON + TOFF1}{TON + TOFF1 + TOFF2} = IAVG_{TON} \frac{TON + TOFF1}{TON + TOFF} ,$$

   wobei TON die EIN-Zeit ist, TOFF1 ein erster nichtleitender Abschnitt der AUS-Zeit TOFF ist, während dessen der Versorgungsstrom wieder auf Null zurückkehrt, und TOFF2 ein zweiter nichtleitender Abschnitt der AUS-Zeit TOFF ist, während dem der Versorgungsstrom Null ist.

7. DC/DC-Wandlersystem nach einem der Ansprüche 1 bis 6, wobei die Optimierungsschaltung (20) konfiguriert ist, um den Versorgungsstrom unter Verwendung eines Analog-Digital-Wandlers (ADC) zu bestimmen.

8. DC/DC-Wandlersystem nach einem der Ansprüche 1 bis 7, wobei der DC/DC-Wandler (10) mindestens zwei einstellbare Betriebsparameter aufweist, und wobei die Optimierungsschaltung (20) konfiguriert ist, um nach dem Bestimmen der optimalen Effizienz für den ausgewählten Betriebsparameter,

- einen weiteren der mindestens zwei einstellbaren Betriebsparameter auszuwählen; und
- eine optimale Effizienz des DC/DC-Wandlers (10) für den weiteren ausgewählten Betriebsparameter unter Anpassung des weiteren ausgewählten Betriebsparameters basierend auf einem bestimmten Versorgungsstrom zu bestimmen.

9. DC/DC-Wandlersystem nach einem der Ansprüche 1 bis 8, wobei der mindestens eine einstellbare Betriebsparameter mindestens einen der folgenden umfasst:

- eine Betriebsfrequenz des DC/DC-Wandlers (10);
- eine Größe eines Schalttransistors (ST1, ST2);
- eine Steuerspannung des Schalttransistors (ST1, ST2);
- eine Schaltgeschwindigkeit des Schalttransistors (ST1, ST2) ;
- eine Schaltverzögerung des Schalttransistors (ST1, ST2) ;
- eine einstellbare Überlappungszeit zwischen zwei Schalttransistoren.

10. DC/DC-Wandlersystem nach einem der Ansprüche 1 bis 9, wobei der DC/DC-Wandler (10) einen Schalttransistor (ST1, ST2) umfasst, der eine Vielzahl von parallel verbundenen Transistoren beinhaltet, wobei die jeweiligen Steueranschlüsse der Vielzahl von parallel verbundenen Transistoren jeweils mit einem gemeinsamen Steueranschluss des Schalttransistors (ST1, ST2) schaltbar verbunden sind.

11. Verfahren zum Betreiben eines DC/DC-Wandlers (10), der konfiguriert ist, um aus einer an einer Versorgungsklemme (VSUP) gelieferten Eingangsspannung eine Ausgangsspannung zu erzeugen, und der mindestens einen einstellbaren Betriebsparameter aufweist, wobei das Verfahren umfasst:

- Auswählen eines der mindestens einen einstellbaren Betriebsparameter; und
- iterativ für den ausgewählten Betriebsparameter,

- Bestimmen eines an der Versorgungsklemme (VSUP) bereitgestellten Versorgungsstroms;
- Bestimmen einer Effizienz des DC/DC-Wandlers (10) basierend auf dem bestimmten Versorgungsstrom; und
- Anpassen des ausgewählten Betriebsparameters;

bis eine optimale Effizienz bestimmt ist;
wobei der DC/DC-Wandler (10) einen Schalttransistor (ST1, ST2) umfasst;
**dadurch gekennzeichnet, dass**
das Bestimmen des Versorgungsstroms umfasst

- Bestimmen eines ersten durchschnittlichen Stroms (IAVGTON) während einer EIN-Zeit (TON) des Schalttransistors (ST1, ST2) durch Messen des Stroms durch den Schalttransistor (ST1, ST2) während der EIN-Zeit (TON) des Schalttransistors (ST1, ST2);
- Berechnen eines zweiten Durchschnittsstroms (IAVG) während mindestens einer Schaltperiode (TDC) des DC/DC-Wandlers (10) basierend auf dem ersten Durchschnittsstrom ($IAVG_{TON}$); und
- Verwenden des zweiten Durchschnittsstroms (IAVG) als den zu bestimmenden Versorgungsstrom.

12. Verfahren nach Anspruch 11,
wobei die optimale Effizienz durch einen niedrigsten bestimmten Versorgungsstrom definiert ist.

13. Verfahren nach Anspruch 11 oder 12,
wobei das Berechnen des zweiten Durchschnittsstroms (IAVG) das Bestimmen des Stroms durch den Schalttransistor (ST1, ST2) während einer AUS-Zeit (TOFF, TOFF1, TOFF2) des Schalttransistors (ST1, ST2) basierend auf dem ersten Durchschnittsstrom ($IAVG_{TON}$) umfasst.

14. Verfahren nach einem der Ansprüche 11 bis 13,
wobei der DC/DC-Wandler (10) mindestens zwei einstellbare Betriebsparameter aufweist, und wobei das Verfahren ferner umfasst, nach dem Bestimmen der optimalen Effizienz für den ausgewählten Betriebsparameter,

- Auswählen eines weiteren der mindestens zwei einstellbaren Betriebsparameter; und
- Bestimmen einer optimalen Effizienz des DC/DC-Wandlers (10) für den weiteren ausgewählten Betriebsparameter unter Anpassung des weiteren ausgewählten Betriebsparameters basierend auf einem bestimmten Versorgungsstrom.

**15.** Verfahren nach einem der Ansprüche 11 bis 14,
wobei der mindestens eine einstellbare Betriebsparameter mindestens einen der folgenden umfasst:

- eine Betriebsfrequenz des DC/DC-Wandlers (10);
- eine Größe eines Schalttransistors (ST1, ST2);
- eine Steuerspannung des Schalttransistors (ST1, ST2);
- eine Schaltgeschwindigkeit des Schalttransistors (ST1, ST2) ;
- eine Schaltverzögerung des Schalttransistors (ST1, ST2) ;
- eine einstellbare Überlappungszeit zwischen zwei Schalttransistoren.

**Revendications**

**1.** Système de convertisseur DC/DC, comprenant un convertisseur DC/DC (10) qui est configuré pour générer, de manière commutée, une tension de sortie à partir d'une tension d'entrée fournie à une borne d'alimentation (VSUP) et présente au moins un paramètre de fonctionnement réglable, et comprenant un circuit d'optimisation (20) qui est configuré pour sélectionner un des au moins un paramètre de fonctionnement réglable et pour le paramètre de fonctionnement sélectionné, à, itérativement

- déterminer un courant d'alimentation fourni à la borne d'alimentation (VSUP);
- déterminer l'efficacité du convertisseur DC/DC (10) sur la base du courant d'alimentation déterminé; et
- régler le paramètre de fonctionnement sélectionné;

jusqu'à ce qu'une efficacité optimale soit déterminée;
dans laquelle le convertisseur DC/DC (10) comprend un transistor de commutation (ST1, ST2);
**caractérisé en ce que**
le circuit d'optimisation (20) est configuré

- pour déterminer un premier courant moyen (IAVGTON) pendant un temps ON (TON) du transistor de commutation (ST1, ST2) en mesurant le courant traversant le transistor de commutation (ST1, ST2) pendant le temps ON (TON) du transistor de commutation (ST1, ST2) ;
- pour calculer un second courant moyen (IAVG) pendant au moins une période de commutation (TDC) du convertisseur DC/DC (10) sur la base du premier courant moyen ($IAVG_{TON}$) ; et
- d'utiliser le deuxième courant moyen (IAVG) comme courant d'alimentation à déterminer.

**2.** Système de convertisseur DC/DC selon la revendication 1, dans laquelle l'efficacité optimale est définie par un courant d'alimentation déterminé le plus faible.

**3.** Système de convertisseur DC/DC selon la revendication 1 ou 2, dans lequel le circuit d'optimisation (20) est configuré pour limiter une plage de réglage des paramètres de fonctionnement réglables.

**4.** Système de convertisseur DC/DC selon l'une des revendications 1 à 3, dans lequel le circuit d'optimisation (20) est configuré pour calculer le second courant moyen (IAVG) en déterminant le courant à travers le transistor de commutation (ST1, ST2) pendant un temps OFF (TOFF, TOFF1, TOFF2) du transistor de commutation (ST1, ST2) basé sur le premier courant moyen ($IAVG_{TON}$).

**5.** Système de convertisseur DC/DC selon l'une des revendications 1 à 4, dans lequel le circuit d'optimisation (20) est configuré, dans un mode de fonctionnement à conduction continue du convertisseur DC/DC, pour utiliser le premier courant moyen ($IAVG_{TON}$) pour le second courant moyen (IAVG).

**6.** Système de convertisseur DC/DC selon la revendication 5, dans lequel le circuit d'optimisation (20) est configuré, dans un mode de fonctionnement à conduction discontinue du convertisseur DC/DC, pour calculer le second courant moyen IAVG sur la base du premier courant moyen $IAVG_{TON}$ selon :

$$IAVG = IAVG_{TON} \frac{TON + TOFF1}{TON + TOFF1 + TOFF2} = IAVG_{TON} \frac{TON + TOFF1}{TON + TOFF},$$

où TON est le temps ON, TOFF1 est une première partie non conductrice du temps OFF TOFF, pendant laquelle le courant d'alimentation revient à zéro, et TOFF2 est une seconde partie non conductrice du temps OFF TOFF, pendant laquelle le courant d'alimentation est nul.

**7.** Système de convertisseur DC/DC selon l'une des revendications 1 à 6, dans lequel le circuit d'optimisation (20) est configuré pour déterminer le courant d'alimentation en utilisant un convertisseur analogique-numérique (ADC).

**8.** Système de convertisseur DC/DC selon l'une des revendications 1 à 7, dans lequel le convertisseur DC/DC (10) comporte au moins deux paramètres de fonctionnement réglables, et dans lequel le circuit d'optimisation (20) est configuré, après détermination du efficacité optimale du paramètre de fonctionnement sélectionné, pour,

- sélectionner un autre des au moins deux paramètres de fonctionnement réglables ; et
- déterminer une efficacité optimale du convertisseur DC/DC (10) pour l'autre paramètre de fonctionnement sélectionné tout en ajustant l'autre paramètre de fonctionnement sélectionné en fonction d'un courant d'alimentation déterminé.

**9.** Système de convertisseur DC/DC selon l'une des revendications 1 à 8, dans lequel le au moins un paramètre de fonctionnement réglable comprend au moins un des éléments suivants:

- une fréquence de fonctionnement du convertisseur DC/DC (10) ;
- la taille d'un transistor de commutation (ST1, ST2) ;
- une tension de commande du transistor de commutation (ST1, ST2) ;
- une vitesse de commutation du transistor de commutation (ST1, ST2) ;
- un retard de commutation du transistor de commutation (ST1, ST2) ;
- un temps de chevauchement réglable entre deux transistors de commutation.

**10.** Système de convertisseur DC/DC selon l'une des revendications 1 à 9, dans lequel le convertisseur DC/DC (10) comprend un transistor de commutation (ST1, ST2) qui comprend une pluralité de transistors connectés en parallèle, dans lequel les bornes de commande respectives de la pluralité de transistors connectés en parallèle sont chacune connectées à une borne de commande commune du transistor de commutation (ST1, ST2) de manière commutable.

**11.** Méthode pour opérer un convertisseur DC/DC (10), qui est configuré pour générer, de manière commutée, une tension de sortie à partir d'une tension d'entrée fournie à une borne d'alimentation (VSUP) et présente au moins un paramètre de fonctionnement réglable, le procédé comprenant :

- sélectionner l'un des au moins un des paramètres de fonctionnement réglables ; et
- itérativement, pour le paramètre de fonctionnement sélectionné,

- détermination d'un courant d'alimentation fourni à la borne d'alimentation (VSUP) ;
- déterminer une efficacité du convertisseur DC/DC (10) sur la base du courant d'alimentation déterminé ; et
- régler le paramètre de fonctionnement sélectionné ;

jusqu'à ce qu'une efficacité optimale soit déterminée ; dans laquelle le convertisseur DC/DC (10) comprend un transistor de commutation (ST1, ST2) ;
**caractérisé en ce que**
la détermination du courant d'alimentation comprend

- déterminer un premier courant moyen ($IAVG_{TON}$) pendant un temps ON (TON) du transistor de commutation (ST1, ST2) en mesurant le courant traversant le transistor de commutation (ST1, ST2) pendant le temps ON (TON) du transistor de commutation (ST1, ST2) ;
- calculer un second courant moyen (IAVG) pendant au moins une période de commutation (TC) du convertisseur DC/DC (10) sur la base du premier courant moyen ($IAVG_{TON}$) ; et
- utiliser le deuxième courant moyen (IAVG) comme courant d'alimentation à déterminer.

**12.** Méthode selon la revendication 11,
dans laquelle l'efficacité optimale est définie par un courant d'alimentation déterminé le plus faible.

**13.** Méthode selon la revendication 11 ou 12,
dans laquelle le calcul du second courant moyen (IAVG) comprend la détermination du courant à travers le transistor de commutation (ST1, ST2) pendant un temps OFF (TOFF, TOFF1, TOFF2) du transistor de commutation (ST1, ST2) sur la base du premier courant moyen (IAVG$_{TON}$).

**14.** Méthode selon l'une des revendications 11 à 13,
dans lequel le convertisseur DC/DC (10) a au moins deux paramètres de fonctionnement réglables, et dans lequel le procédé comprend en outre, après avoir déterminé l'efficacité optimale pour le paramètre de fonctionnement sélectionné,

- sélectionner un autre des au moins deux paramètres de fonctionnement réglables ; et
- déterminer une efficacité optimale du convertisseur DC/DC (10) pour l'autre paramètre de fonctionnement sélectionné tout en ajustant l'autre paramètre de fonctionnement sélectionné en fonction d'un courant d'alimentation déterminé.

**15.** Méthode selon l'une des revendications 11 à 14,
dans lequel le au moins un paramètre de fonctionnement réglable comprend au moins un des éléments suivants :

- une fréquence de fonctionnement du convertisseur DC/DC (10) ;
- la taille d'un transistor de commutation (ST1, ST2) ;
- une tension de commande du transistor de commutation (ST1, ST2) ;
- une vitesse de commutation du transistor de commutation (ST1, ST2) ;
- un retard de commutation du transistor de commutation (ST1, ST2) ;
- un temps de chevauchement réglable entre deux transistors de commutation.

**Fig 1**

**Fig 2**

## Fig 3

## Fig 4

## Fig 5

**Fig 6**

**Fig 7**

**Fig 8**

## REFERENCES CITED IN THE DESCRIPTION

**Patent documents cited in the description**

- EP 1134880 A2

**Non-patent literature cited in the description**

- **KIMBALL J et al.** Continuous-time optimization of gate timing for synchronous rectification. *CIRCUITS AND SYSTEMS, 1996., IEEE 39TH MIDWEST SYMPOSIUM ON AMES,* 18 August 1996